# EUROPEAN PATENT SPECIFICATION

(11) **EP 3 101 721 B1**
(45) Date of publication and mention of the grant of the patent: **10.10.2018**
(21) Application number: 15743122.2
(22) Date of filing: 06.01.2015
(51) Int. Cl.: H01M 8/1246, H01M 8/2425, H01M 8/0256, H01M 8/124

(54) **SOLID OXIDE FUEL CELL AND SOLID OXIDE FUEL CELL STACK**
FESTOXIDBRENNSTOFFZELLE UND FESTOXIDBRENNSTOFFZELLENSTAPEL
PILE À COMBUSTIBLE À OXYDE SOLIDE ET EMPILEMENT DE PILES À COMBUSTIBLE À OXYDE SOLIDE

(30) Priority: 28.01.2014 JP 2014013254
(43) Date of publication of application: 07.12.2016
(73) Proprietor: Murata Manufacturing Co., Ltd., Nagaokakyo-shi, Kyoto 617-8555 (JP)
(72) Inventor: YAMADA, Hiroaki, Nagaokakyo-shi Kyoto 617-8555 (JP); NAKAI, Hideaki, Nagaokakyo-shi Kyoto 617-8555 (JP); IHA, Michiaki, Nagaokakyo-shi Kyoto 617-8555 (JP)
(74) Representative: Reeve, Nicholas Edward
(86) International application number: PCT/JP2015/050128
(87) International publication number: WO 2015/115125

(56) References cited:
- EP-A2- 1 304 755
- WO-A1-2012/132894
- JP-A- 2005 019 237
- JP-A- 2009 205 907
- JP-B2- 4 368 850
- US-A1- 2005 026 028

## Description

### Technical Field

The present invention relates to a solid oxide fuel cell and a solid oxide fuel cell stack obtained by stacking the solid oxide fuel cell.

### Background Art

Solid oxide fuel cells(SOFC: Solid Oxide Fuel Cell), molten carbonate fuel cells, phosphoric-acid fuel cells, solid polymer fuel cells, and the like are known as fuel cells. Above all, the SOFCs are not required to use any liquid component, but able to be internally reformed in the case of using a hydrocarbon fuel. Accordingly, the solid oxide fuel cells have been attracting more attention.

Japanese Patent No. 5077238 discloses a solid oxide fuel cell where a via-hole conductor composed of a metal is electrically connected to a power generation film in a base composed of a ceramic.

However, the use of a metal for the via-hole conductor as in JP5077238 has sometimes produced voids at the interface between the base and the via-hole conductor in co-sintering. This is because the shrinkage percentage differs substantially between the base composed of a ceramic and the via-hole conductor composed of a metal. Moreover, gas leakage has sometimes occurred from the voids.

We have appreciated that it would be desirable to provide a solid oxide fuel cell and a solid oxide fuel cell stack which are unlikely to cause gas leakage.

### SUMMARY OF THE INVENTION

A solid oxide fuel cell according to the present invention includes: a power generation film including a solid oxide electrolyte layer with first and second principal surfaces, a first electrode layer stacked on the first principal surface of the solid oxide electrolyte layer, and a second electrode layer stacked on the second principal surface of the solid oxide electrolyte layer; a first base that is provided on the side closer to the first principal surface of the solid oxide electrolyte layer to form a first gas flow channel, and includes a ceramic; a second base that is provided on the side closer to the second principal surface of the solid oxide electrolyte layer to form a second gas flow channel, and includes a ceramic; and a via-hole conductor unit that is provided in the first base, and has an end connected to a surface on the side opposite to a surface of the first electrode layer in contact with the solid oxide electrolyte layer, the via-hole conductor unit has a first via-hole conductor with a first end surface and a second via-hole conductor with a second end surface, with the first end surface of the first via-hole conductor in contact with the second end surface of the second via-hole conductor, wherein the first and second via-hole conductors are formed from metals, the second end surface of the second via-hole conductor is larger in area than the first end surface of the first via-hole conductor, and a boundary part between an outer peripheral edge of the first end surface of the first via-hole conductor and a part of the first base located outside the outer peripheral edge is located in the second end surface of the second via-hole conductor.

In a particular aspect of the solid oxide fuel cell according to the present invention, the area ratio (S1/S2) between the area S1 of the first end surface of the first via-hole conductor and the area S2 of the second end surface of the second via-hole conductor is 0.36 or less.

In other particular aspect of the solid oxide fuel cell according to the present invention, the area ratio (S2/S1) between the area S2 of the second end surface of the second via-hole conductor and the area S1 of the first end surface of the first via-hole conductor is 2.78 or more.

In yet another particular aspect of the solid oxide fuel cell according to the present invention, the first and second bases and the first and second via-hole conductors are formed by co-sintering.

In yet other particular aspect of the solid oxide fuel cell according to the present invention, the cell further includes a via-hole conductor that is connected to a surface on the side opposite to a surface of the second electrode layer in contact with the solid oxide electrolyte layer, and includes a ceramic.

In yet other particular aspect of the solid oxide fuel cell according to the present invention, the first electrode layer is an anode layer, and the second electrode layer is a cathode layer.

A solid oxide fuel cell stack according to the present invention is obtained by stacking the solid oxide fuel cell according to the present invention.

According to the present invention, a solid oxide fuel cell and a solid oxide fuel cell stack can be provided which are unlikely to cause gas leakage.

### BRIEF EXPLANATION OF DRAWINGS

FIG. 1 is a schematic elevational cross-sectional view of a solid oxide fuel cell according to a first embodiment of the present invention.
FIG. 2 is a schematic elevational cross-sectional view of a solid oxide fuel cell according to a second embodiment of the present invention.
FIG. 3 is a schematic elevational cross-sectional view of a solid oxide fuel cell according to a third embodiment of the present invention.
FIG. 4 is a schematic elevational cross-sectional view of a solid oxide fuel cell according to a fourth embodiment of the present invention.
FIG. 5 is a schematic elevational cross-sectional view of a solid oxide fuel cell according to a fifth embodiment of the present invention.
FIG. 6 is a schematic elevational cross-sectional view of a solid oxide fuel cell stack according to an embodiment of the present invention.

### DETAILED DESCRIPTION OF EXAMPLE EMBODIMENTS

The present invention will be demonstrated by describing specific embodiments of the present invention with reference to the drawings.

### Solid Oxide Fuel Cell

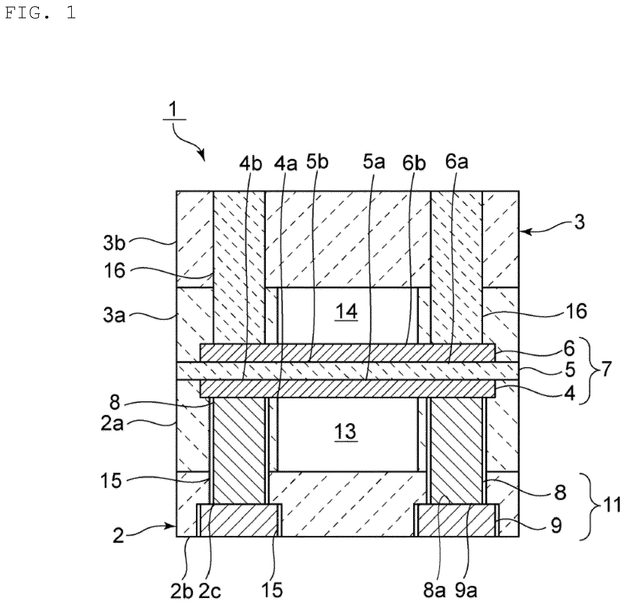

FIG. 1 is a schematic elevational cross-sectional view of a solid oxide fuel cell according to a first embodiment of the present invention.

The solid oxide fuel cell 1 according to the first embodiment includes first and second bases 2, 3, a power generation film 7, and a via-hole conductor unit 11. As shown in FIG. 1, the power generation film 7 is composed of a solid oxide electrolyte layer 5, a first electrode layer 4, and a second electrode layer 6.

The solid oxide electrolyte layer 5 has first and second principal surfaces 5a, 5b. The solid oxide electrolyte layer 5 is not particularly limited, but preferably composed of a highly ion-conductive material. For example, stabilized zirconia, ceria (CeO₂) based solid solutions, bismuth oxide solid solutions, element substitution products of LaGaO₃, and the like can be used as the material as mentioned above. Specific examples of the stabilized zirconia include 10 mol% yttria stabilized zirconia (10YSZ) and 11 mol% scandia stabilized zirconia (11ScSZ). Specific examples of partially stabilized zirconia include 3 mol% yttria partially stabilized zirconia (3YSZ).

On the first principal surface 5a of the solid oxide electrolyte layer 5, the first electrode layer 4 is stacked. The first electrode layer 4 has first and second principal surfaces 4a, 4b.

On the second principal surface 5b of the solid oxide electrolyte layer 5, the second electrode layer 6 is stacked. The second electrode layer 6 has first and second principal surfaces 6a, 6b.

In the present embodiment, the first electrode layer 4 is an anode layer, whereas the second electrode layer 6 is a cathode layer. Understandably, the first electrode layer 4 may be a cathode layer, whereas the second electrode layer 6 may be an anode layer.

At the anode layer, oxygen ions and a fuel gas react to emit electrons. Therefore, a material is preferred which is porous, high in electron conductivity, and unlikely to cause an inter-solid reaction with the solid oxide electrolyte layer 5 or the like at high temperatures. For example, yttria stabilized zirconia containing Ni, scandia stabilized zirconia containing Ni, scandia-ceria stabilized zirconia containing Ni, or Pt is used as this material. Further, according to the present embodiment, the anode layer is composed of a porous ceramic.

At the cathode layer, oxygen takes electrons in to form oxygen ions. Therefore, a material is preferred which is porous, high in electron conductivity, and unlikely to cause an inter-solid reaction with the solid oxide electrolyte layer 5 or the like at high temperatures. For example, a LaMnO₃ based oxide or a LaCoO₃ based oxide is used as this material. Examples of the LaMnO₃ based oxide include La_{0.8}Sr_{0.2}MnO₃. Examples of the LaCoO₃ based oxide include La_{0.8}Sr_{0.2}Co_{0.2}Fe_{0.8}O₃.

The first base 2 is provided so as to form a first gas flow channel 13 outside the first principal surface 5a of the solid oxide electrolyte layer 5. The first base 2 has a first gas flow channel formation part 2a and a separator part 2b for forming the first gas flow channel 13. The first gas flow channel 13 is a compartment defined and formed by the first gas flow channel formation part 2a, the separator part 2b, and the first electrode layer 4. It becomes possible to supply a gas to the first electrode layer 4 through the first gas flow channel 13. It is to be noted that the first gas flow channel 13 is an anode gas flow channel in the present embodiment.

On the other hand, the second base 3 is provided so as to form a second gas flow channel 14 outside the second principal surface 5b of the solid oxide electrolyte layer 5. The second base 3 also has a second gas flow channel formation part 3a and a separator part 3b for forming the second gas flow channel 14. The second gas flow channel 14 is a compartment defined and formed by the second gas flow channel formation part 3a, the separator part 3b, and the second electrode layer 6. It becomes possible to supply a gas to the second electrode layer 6 through the second gas flow channel 14. It is to be noted that the second gas flow channel 14 is a cathode gas flow channel in the present embodiment.

The first and second bases 2, 3 are formed from ceramics. The first and second bases 2, 3 may be formed from the same material, or formed from different materials. The ceramics for forming the first and second bases 2, 3 include partially stabilized zirconia.

The via-hole conductor unit 11 is provided in the first base 2. The via-hole conductor unit 11 is provided to have an end connected to the first principal surface 4a of the first electrode layer 4. In the present embodiment, more than one via-hole conductor unit 11 is provided in the first base 2. Understandably, the number of via-hole conductor units 11 is not particularly limited.

The via-hole conductor unit 11 has a first via-hole conductor 8 and a second via-hole conductor 9. While the via-hole conductor unit 11 is composed of the two via-hole conductors in the present embodiment, the via-hole conductor unit 11 may be composed of three or more via hole conductors as in a third embodiment according to the present invention as will be described later.

More than one first via-hole conductor 8 is provided in the first embodiment shown in FIG. 1. The first gas flow channel 13 is disposed between the first via-hole conductors 8. Understandably, the number of the first via-hole conductors 8 is not particularly limited as long as the first gas flow channel 13 is disposed between the multiple first via-hole conductors 8.

The first via-hole conductor 8 has an end connected to the first principal surface 4a of the first electrode layer 4. Further, the second via-hole conductor 9 is provided such that a second end surface 9a of the second via-hole conductor 9 is brought into contact with a first end surface 8a located at the other end of the first via-hole conductor 8.

The materials used for the first and second via-hole conductors 8, 9 are preferably composed of dense metals. Thus, gas leakage can be suppressed more effectively. Ag-Pd alloys, Au, and Pt can be used as the dense metals mentioned above.

In addition, in the present embodiment, the first and second via-hole conductors 8, 9 are rectangular in cross-sectional shape. The area of the second end surface 9a of the second via hole conductor 9 is larger than the area of the first end surface 8a of the first via hole conductor 8. Further, boundary parts 2c between the outer peripheral edges of the first end surfaces 8a of the first via-hole conductors 8 and the separator part 2b of the first base 2 located outside the outer peripheral edges are located in the second end surfaces 9a of the second via-hole conductors 9.

The first and second bases 2, 3 and the first and second via-hole conductors 8, 9 are prepared by applying co-sintering to ceramic green sheets to serve as the bases and metal pastes to serve as the via-hole conductors. In this regard, the shrinkage percentage differs substantially between the metals and the ceramics. Therefore, in the co-sintering, like voids 15 as shown in FIG. 1, voids 15 are produced at the interfaces between side surfaces of the first and second via-hole conductors 8, 9 composed of the metals and the first base 2 composed of the ceramics.

However, in the present embodiment, the voids 15, that is, the boundary parts 2c between the outer peripheral edges of the first end surfaces 8a of the first via hole conductors 8 and the separator part 2b of the first base 2 located outside the outer peripheral edges are located in the second end surface 9a of the second via hole conductor 9. Accordingly, the voids 15 are sealed with the second end surfaces 9a of the second via-hole conductors 9. As just described, in the present invention, even when the voids 15 are formed, openings of the voids 15 at the first end surfaces 8a are sealed with the second end surfaces 9a of the second via-hole conductors 9. Accordingly, gas leakage caused by the passage of, through the voids 15, the gas supplied to the porous first electrode layer 4 can be suppressed more effectively.

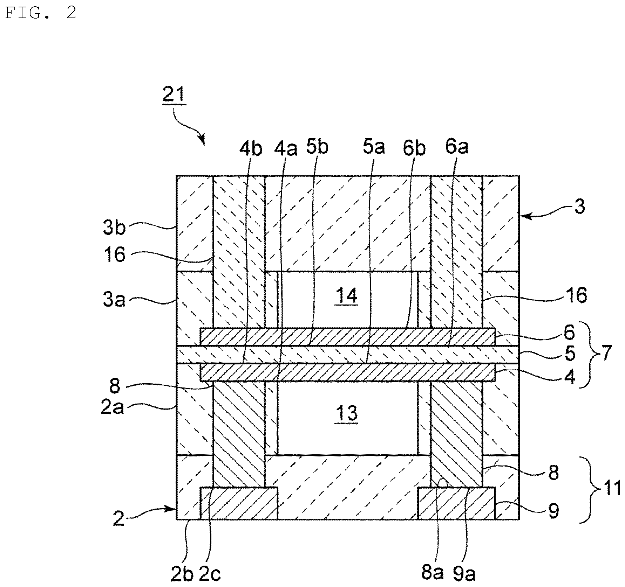

It is to be noted that a structure without any void 15 observed may be adopted, like a solid oxide fuel cell 21 according to a second embodiment as shown in FIG. 2. Also in the second embodiment, boundary parts 2c between the outer peripheral edges of the first end surfaces 8a of the first via-hole conductors 8 and the separator part 2b of the first base 2 located outside the outer peripheral edges are located in the second end surfaces 9a of the second via-hole conductors 9. Accordingly, although non-observable slight voids may be produced by co-sintering even when no void 15 can be observed, gas leakage can be suppressed effectively in such a case.

In addition, according to the present invention, the area ratio (S1/S2) between the area S1 of the first end surface 8a of the first via-hole conductor 8 and the area S2 of the second end surface 9a of the second via-hole conductor 9 is preferably 0.36 or less. Alternatively, the area ratio (S2/S1) between the area S2 of the second end surface 9a of the second via-hole conductor 9 and the area S1 of the first end surface 8a of the first via-hole conductor 8 is preferably 2.78 or more. This is because gas leakage can be further reliably prevented when the area ratio falls within the range mentioned above.

In the first embodiment, a fourth via-hole conductor 16 is further provided in the second base 3. The fourth via-hole conductor 16 is connected to the second principal surface 6b of the second electrode layer 6. The fourth via-hole conductor 16 is formed from a conductive ceramic. The conductive ceramic is not particularly limited, but lanthanum strontium manganite (LSM), but lanthanum chromite, and the like can be used as the conductive ceramic. The fourth via-hole conductor 16 is formed from the ceramic as mentioned above, and thus shows a small difference in shrinkage percentage from the second base 3 composed of the ceramic. Accordingly, voids are unlikely to be produced at the interface between the fourth via-hole conductor 16 and the second base 3.

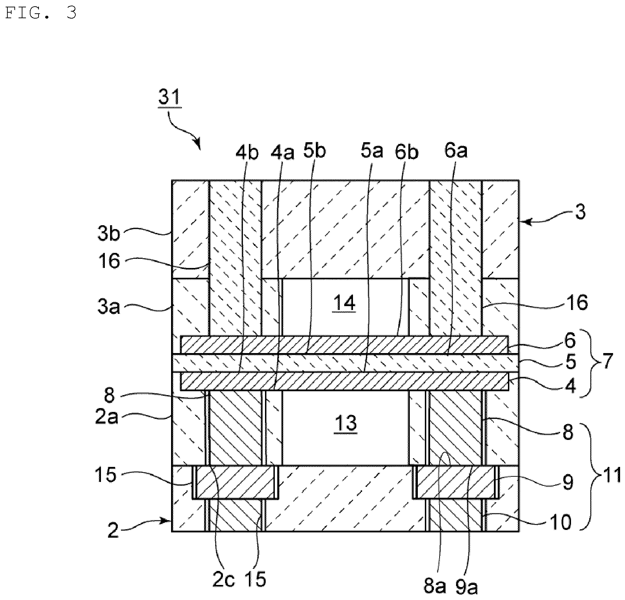

FIG. 3 is a schematic elevational cross-sectional view of a solid oxide fuel cell 31 according to a third embodiment of the present invention.

In the third embodiment, there is a third via-hole conductor 10 in contact with an end surface on the side opposite to a second end surface 9a of a second via-hole conductor 9. In the other respects, the cell is the same as the solid oxide fuel cell according to the first embodiment. It is to be noted that the same as the first and second via-hole conductors 8, 9 can be used as the material constituting the third via-hole conductor 10.

In the present invention, the first to third via-hole conductors 8 to 10 can be prepared by applying laser processing to a ceramic sheet to serve as a base, thereby forming through holes, and filling the through holes with metal pastes. Therefore, the sizes and shapes of the through holes can be changed easily. It is to be noted that the through holes may be formed by punching, and also in such a case, the sizes and shapes of the through holes can be changed easily.

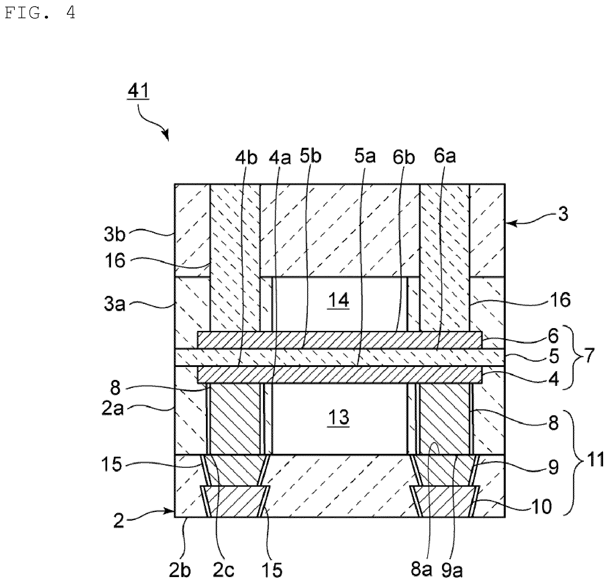

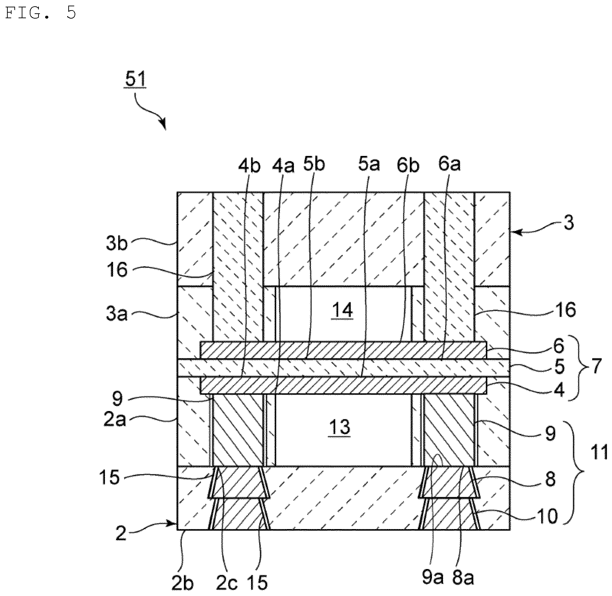

For example, as in fourth and fifth embodiments as shown in FIGS. 4 and 5, via-hole conductors that are trapezoidal in cross-sectional shape can be easily prepared.

In a solid oxide fuel cell 41 according to the fourth embodiment, second and third via-hole conductors 9, 10 that are not rectangular, but trapezoidal in cross-sectional shape are connected to a first via-hole conductor 8. In the other respects, the cell is the same as in the third embodiment.

Further, also in the third and fourth embodiments, boundary parts 2c between the outer peripheral edges of the first end surfaces 8a of the first via-hole conductors 8 and the separator part 2b of the first base 2 located outside the outer peripheral edges are located in the second end surfaces 9a of the second via-hole conductors 9. Therefore, even when voids 15 are produced, gas leakage from the voids 15 can be suppressed reliably.

In a solid oxide fuel cell 51 according to the fifth embodiment, a second via-hole conductor 9 that is rectangular in cross-sectional shape has an end connected to a first principal surface 4a of a first electrode layer 4. Further, a first via-hole conductor 8 is provided such that a first end surface 8a of the first via-hole conductor 8 is brought into contact with a second end surface 9a located at the other end of the second via-hole conductor 9. There is a third via-hole conductor 10 in contact with an end surface on the side opposite to the first end surface 8a of the first via-hole conductor 8. The first and third via-hole conductors 8, 10 are trapezoidal in cross-sectional shape.

In the other respects, the cell is the same as the solid oxide fuel cell 31 according to the third embodiment.

As shown in FIG. 5, also in the fifth embodiment, the area of the second end surface 9a of the second via-hole conductor 9 is larger than the area of the first end surface 8a of the first via-hole conductor 8. Further, boundary parts 2c between the outer peripheral edges of the first end surfaces 8a of the first via-hole conductors 8 and the separator part 2b of the first base 2 located outside the outer peripheral edges are located in the second end surfaces 9a of the second via-hole conductors 9. Accordingly, also in the fifth embodiment, voids 15 are sealed with the second end surfaces 9a of the second via-hole conductors 9.

It is to be noted that the end surface 8a of the first via-hole conductor 8, which is smaller in area than the second end surface 9a of the second via-hole conductor 9, is connected to the second via-hole conductor 9 in the fifth embodiment as described above. Accordingly, the second end surfaces 9a of the second via-hole conductors 9 are partially in contact with the first base 2. Therefore, openings of the voids 15, which are formed at the side of the second end surfaces 9a of the second via-hole conductors 9, are sealed with the first base 2.

As just described, according to the fifth embodiment, the voids 15 formed at the sides of the first and second via-hole conductors 8, 9 are sealed with the second end surfaces 9a of the second via-hole conductors 9 or the first base 2, and gas leakage from the voids 15 can be thus suppressed.

### Solid oxide fuel cell stack

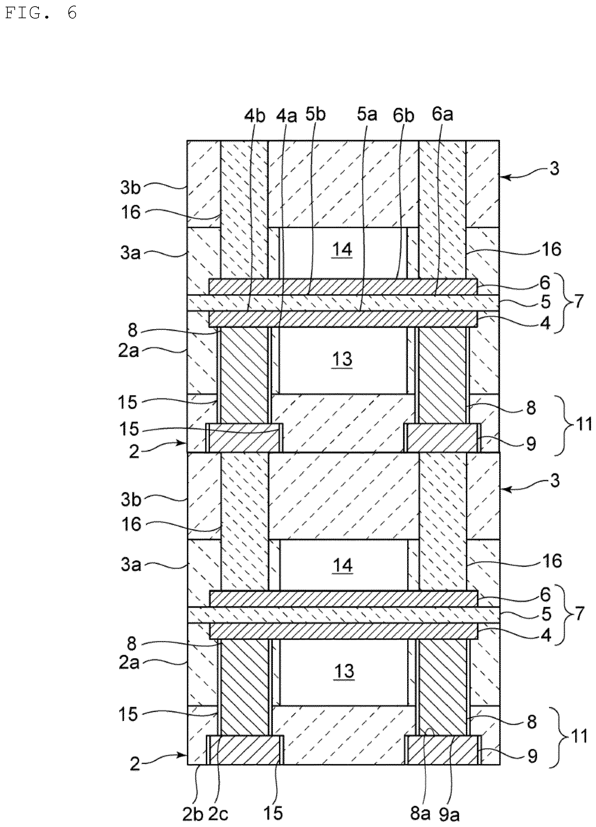

FIG. 6 shows a schematic elevational cross-sectional view of a solid oxide fuel cell stack according to an embodiment of the present invention. The solid oxide fuel cell stack is obtained by stacking the above-described solid oxide fuel cell 1 according to the present invention. While two solid oxide fuel cells 1 are stacked in FIG. 6, three or more may be stacked.

As shown in FIG. 6, the solid oxide fuel cell stack is configured such that via-hole conductor units 11 composed of metals are brought into contact with fourth via-hole conductors 16 composed of a ceramic. Further, in the via-hole conductor units 11, boundary parts 2c between the outer peripheral edges of the first end surfaces 8a of the first via-hole conductors 8 and the separator parts 2b of the first bases 2 located outside the outer peripheral edges are located in the second end surfaces 9a of the second via-hole conductors 9 as described above.

Accordingly, the gas supplied from first gas flow channel 13 to porous first electrode layers 4 is blocked by the first and second via-hole electrodes 8, 9, and can be thus prevented from leaking toward the fourth via-hole conductors 16. In the solid oxide fuel cell stack according to the present invention, gas leakage to the fourth via-hole conductors 16 is suppressed as just described, and the ceramic such as LSM constituting the fourth via-hole conductors 16 can be thus kept from being degraded by the gas.

As described above, the solid oxide fuel cell and solid oxide fuel cell stack according to the present invention have the via-hole conductor units where the boundary parts between the outer peripheral edges of the first end surfaces of the first via-hole conductors and the separator parts of the first bases located outside the outer peripheral edges are located in the second end surfaces of the second via-hole conductors. Accordingly, even when voids are produced by co-sintering, gas leakage from the voids can be suppressed.

### DESCRIPTION OF REFERENCE SYMBOLS

1, 21, 31, 41, 51: solid oxide fuel cell
2: first base
3: second base
2a: first gas flow channel formation part
3a: second gas flow channel formation part
2b, 3b: separator part
2c: boundary part
4: first electrode layer
5: solid oxide electrolyte layer
6: second electrode layer
4a, 5a, 6a: first principal surface
4b, 5b, 6b: second principal surface
7: power generation film
8: first via-hole conductor
8a: first end surface
9: second via-hole conductor
9a: second end surface
10: third via-hole conductor
11: via-hole conductor unit
13: first gas flow channel
14: second gas flow channel
15: void
16: fourth via-hole conductor

## Claims

1. A solid oxide fuel cell (1) comprising:
a power generation film (7) comprising a solid oxide electrolyte layer (5) with first and second principal surfaces (5a, 5b), a first electrode layer (4) stacked on the first principal surface of the solid oxide electrolyte layer, and a second electrode layer (6) stacked on the second principal surface (5b) of the solid oxide electrolyte layer (5);
a first base (2) that is provided on a side closer to the first principal surface (5a) of the solid oxide electrolyte layer to form a first gas flow channel (13), and comprises a ceramic;
a second base (3) that is provided on a side closer to the second principal surface (5b) of the solid oxide electrolyte layer (5) to form a second gas flow channel (14), and comprises a ceramic; and
a via-hole conductor unit (11) that is provided in the first base (2), and has an end connected to a surface on the side opposite to a surface (4a) of the first electrode layer (4) in contact with the solid oxide electrolyte layer (5),
wherein the via-hole conductor unit (11) has a first via-hole conductor (8) with a first end surface (8a) and a second via-hole conductor (9) with a second end surface (9a), with the first end surface (8a) of the first via-hole conductor (8) in contact with the second end surface (9a) of the second via-hole conductor (9), wherein the first (8) and second (9) via-hole conductors are formed from metals,
the second end surface (9a) of the second via-hole conductor (9) is larger in area than the first end surface (8a) of the first via-hole conductor (8), and
a boundary part (2c) between an outer peripheral edge of the first end surface (8a) of the first via-hole conductor (8) and a part of the first base located outside the outer peripheral edge is located in the second end surface of the second via-hole conductor.

2. The solid oxide fuel cell according to claim 1, wherein an area ratio (S1/S2) between an area S1 of the first end surface (8a) of the first via-hole conductor (8) and an area S2 of the second end surface (9a) of the second via-hole conductor (9) is 0.36 or less.

3. The solid oxide fuel cell according to claim 1, wherein an area ratio (S2/S1) between an area S2 of the second end surface (9a) of the second via-hole conductor (9) and an area S1 of the first end surface (8a) of the first via-hole conductor (8) is 2.78 or more.

4. The solid oxide fuel cell according to any one of claims 1 to 3, wherein the first (2) and second (3) bases and the first (8) and second (9) via-hole conductors are formed by co-sintering.

5. The solid oxide fuel cell according to any one of claims 1 to 4, further comprising a via-hole conductor that is connected to a surface on the side opposite to a surface of the second electrode layer in contact with the solid oxide electrolyte layer, and comprises a ceramic.

6. The solid oxide fuel cell according to any one of claims 1 to 5, wherein the first electrode layer is an anode layer, and the second electrode layer is a cathode layer.

7. A solid oxide fuel cell stack obtained by stacking the solid oxide fuel cell according to any one of claims 1 to 6.

## Patentansprüche

1. Festoxidbrennstoffzelle (1), umfassend:
einen Stromerzeugungsfilm (7), umfassend eine Festoxidelektrolytschicht (5) mit ersten und zweiten Hauptflächen (5a, 5b), einer ersten Elektrodenschicht (4), die auf der ersten Hauptfläche der Festoxidelektrolytschicht gestapelt ist, und einer zweiten Elektrodenschicht (6), die auf der zweiten Hauptfläche (5b) der Festoxidelektrolytschicht (5) gestapelt ist;
eine erste Basis (2), die auf einer Seite näher zu der ersten Hauptfläche (5a) der Festoxidelektrolytschicht bereitgestellt ist, um einen ersten Gasströmungskanal (13) zu bilden und eine Keramik umfasst;
eine zweite Basis (3), die auf einer Seite bereitgestellt ist, die näher an der zweiten Hauptfläche (5b) der Festoxidelektrolytschicht (5) bereitgestellt ist, um einen zweiten Gasströmungskanal (14) zu bilden, und eine Keramik umfasst; und
eine Durchgangslochteitereinheit (11), die in der ersten Basis (2) bereitgestellt ist und ein Ende aufweist, das mit einer Fläche auf der Seite, die einer Fläche (4a) der ersten Elektrodenschicht (4) gegenüberliegt, in Kontakt mit der Festoxidelektrolytschicht (5) verbunden ist,
wobei die Durchgangslochteitereinheit (11) einen ersten Durchgangslochteiter (8) mit einer ersten Endfläche (8a) und einen zweiten Durchgangslochteiter (9) mit einer zweiten Endfläche (9a) aufweist, wobei die erste Endfläche (8a) des ersten Durchgangslochteiters (8) mit der zweiten Endfläche (9a) des zweiten Durchgangslochteiters (9) in Kontakt steht, wobei der erste (8) und zweite (9) Durchgangslochteiter aus Metallen gebildet sind,
die zweite Endfläche (9a) des zweiten Durchgangslochteiters (9) eine größere Fläche als die erste Endfläche (8a) des ersten Durchgangslochteiters (8) aufweist und
ein Begrenzungsteilteil (2c) zwischen einer äußeren Umfangskante der ersten Endfläche (8a) des ersten Durchgangslochteiters (8) und einem Teil der ersten Basis, der sich außerhalb der äußeren Umfangskante auf der zweiten Endfläche des zweiten Durchgangslochleiters befindet.

2. Festoxidbrennstoffzelle nach Anspruch 1, wobei ein Flächenverhältnis (S1/S2) zwischen einem Bereich S1 der ersten Endfläche (8a) des ersten Durchgangslochleiters (8) und einem Bereich S2 der zweiten Endfläche (9a) des zweiten Durchgangslochleiters (9) 0,36 oder weniger beträgt

3. Festoxidbrennstoffzelle nach Anspruch 1, wobei ein Flächenverhältnis (S2/S1) zwischen einem Bereich S2 der zweiten Endfläche (9a) des zweiten Durchgangslochleiters (9) und einem Bereich S1 der ersten Endfläche (8a) des ersten Durchgangslochleiters (8) 2,78 oder mehr beträgt.

4. Festoxidbrennstoffzelle nach einem der Ansprüche 1 bis 3, wobei die ersten (2) und zweiten (3) Basen und die ersten (8) und zweiten (9) Durchgangslochleiter durch gemeinsames Sintern gebildet wurden.

5. Festoxidbrennstoffzelle nach einem der Ansprüche 1 bis 4, ferner umfassend einen Durchgangslochleiter, der mit einer Fläche auf der Seite, die einer Oberfläche der zweiten Elektrodenschicht, die in Kontakt mit der Festoxidelektrolytschicht steht, gegenüberliegt, und eine Keramik umfasst.

6. Festoxidbrennstoffzelle nach einem der Ansprüche 1 bis 5, wobei die erste Elektrodenschicht eine Anodenschicht ist und die zweite Elektrodenschicht eine Kathodenschicht ist.

7. Festoxid-Brennstoffzellenstapel, erhalten durch Stapeln der Festoxidbrennstoffzelle nach einem der Ansprüche 1 bis 6.

## Revendications

1. Pile à combustible à oxyde solide (1) comprenant :
un film producteur d'énergie (7) comprenant une couche d'électrolyte à oxyde solide (5) avec des première et seconde surfaces principales (5a, 5b), une première couche d'électrode (4) empilée sur la première surface principale de la couche d'électrolyte à oxyde solide, et une seconde couche d'électrode (6) empilée sur la seconde surface principale (5b) de la couche d'électrolyte à oxyde solide (5) ;
une première base (2) qui est ménagée sur un côté plus près de la première surface principale (5a) de la couche d'électrolyte à oxyde solide pour former un premier canal d'écoulement de gaz (13), et comprend une céramique ;
une seconde base (3) qui est ménagée sur un côté plus près de la seconde surface principale (5b) de la couche d'électrolyte à oxyde solide (5) pour former un second canal d'écoulement de gaz (14), et comprend une céramique ; et
une unité de conducteur à trou d'interconnexion (11) qui est ménagée dans la première base (2), et a une extrémité reliée à une surface sur le côté opposé à une surface (4a) de la première couche d'électrode (4) en contact avec la couche d'électrolyte à oxyde solide (5),
dans laquelle l'unité de conducteur à trou d'interconnexion (11) comporte un premier conducteur à trou d'interconnexion (8) muni d'une première surface d'extrémité (8a) et un second conducteur à trou d'interconnexion (9) muni d'une seconde surface d'extrémité (9a), la première surface d'extrémité (8a) du premier conducteur à trou d'interconnexion (8) étant en contact avec la seconde surface d'extrémité (9a) du second conducteur à trou d'interconnexion (9), les premier (8) et second (9) conducteurs à trou d'interconnexion étant formés de métaux,
la seconde surface d'extrémité (9a) du second conducteur à trou d'interconnexion (9) a une plus grande aire que la première surface d'extrémité (8a) du premier conducteur à trou d'interconnexion (8), et
une partie frontière (2c) entre un bord périphérique externe de la première surface d'extrémité (8a) du premier conducteur à trou d'interconnexion (8) et une partie de la première base située à l'extérieur du bord périphérique externe est située dans la seconde surface d'extrémité du second conducteur à trou d'interconnexion.

2. Pile à combustible à oxyde solide selon la revendication 1, dans laquelle un rapport d'aire (S1/S2) entre une aire S1 de la première surface d'extrémité (8a) du premier conducteur à trou d'interconnexion (8) et une aire S2 de la seconde surface d'extrémité (9a) du second conducteur à trou d'interconnexion (9) est de 0,36 ou moins.

3. Pile à combustible à oxyde solide selon la revendication 1, dans laquelle un rapport d'aire (S2/S1) entre une aire S2 de la seconde surface d'extrémité (9a) du second conducteur à trou d'interconnexion (9) et une aire S1 de la première surface d'extrémité (8a) du premier conducteur à trou d'interconnexion (8) est de 2,78 ou plus.

4. Pile à combustible à oxyde solide selon l'une quelconque des revendications 1 à 3, dans laquelle les première (2) et seconde (3) bases et les premier (8) et second (9) conducteurs à trou d'interconnexion sont formés par cofrittage.

5. Pile à combustible à oxyde solide selon l'une quelconque des revendications 1 à 4, comprenant en outre un conducteur à trou d'interconnexion qui est relié à une surface sur le côté opposé à une surface de la seconde couche d'électrode en contact avec la couche d'électrolyte à oxyde solide, et comprend une céramique.

6. Pile à combustible à oxyde solide selon l'une quelconque des revendications 1 à 5, dans laquelle la première couche d'électrode est une couche d'anode, et la seconde couche d'électrode est une couche de cathode.

7. Empilement de piles à combustible à oxyde solide obtenu par empilement de la pile à combustible à oxyde solide selon l'une quelconque des revendications 1 à 6.
